# EUROPÄISCHE PATENTSCHRIFT

(11) **EP 3 208 746 B1**
(45) Veröffentlichungstag und Bekanntmachung des Hinweises auf die Patenterteilung: **03.07.2019**
(21) Anmeldenummer: 16206054.5
(22) Anmeldetag: 22.12.2016
(51) Int. Cl.: G06K 15/02

(54) **VERFAHREN ZUM TINTENSTRAHL-BEDRUCKEN WENIGSTENS EINES GEKRÜMMTEN BEREICHS DER OBERFLÄCHE EINES OBJEKTS**
METHOD FOR INKJET PRINTING OF AT LEAST ONE CURVED AREA OF THE SURFACE OF AN OBJECT
PROCÉDÉ D'IMPRESSION PAR JET D'ENCRE D'AU MOINS UNE ZONE COURBÉE DE LA SURFACE D'UN OBJET

(30) Priorität: 17.02.2016 DE 102016202398
(43) Veröffentlichungstag der Anmeldung: 23.08.2017
(73) Patentinhaber: Heidelberger Druckmaschinen AG, 69115 Heidelberg (DE)
(72) Erfinder: Rupprecht, Andreas, 69256 Mauer (DE); Füner, Michael, 76135 Karlsruhe (DE); Müller, Tobias, 69493 Hirschberg (DE)

(56) Entgegenhaltungen:
- EP-A1- 2 287 722
- EP-A1- 2 327 555
- EP-A1- 2 591 917

## Beschreibung

Die vorliegende Erfindung betrifft ein Verfahren zum Tintenstrahl-Bedrucken wenigstens eines gekrümmten Bereichs der Oberfläche eines Objekts mit den Merkmalen von Anspruch 1. Weiterhin betrifft die Erfindung eine Vorrichtung zur Durchführung des erfindungsgemäßen Verfahrens mit den Merkmalen gemäß Anspruch 8.

Die Erfindung liegt in dem technischen Gebiet des Bedruckens der Oberfläche von räumlich ausgedehnten Objekten bzw. Körpern. Die Oberflächen können gekrümmt sein und werden im Tintenstrahl-Verfahren bedruckt. Hierzu wird ein Tintenstrahl-Druckkopf von einem Roboterarm in einem Druckabstand entlang der zu bedruckenden Oberfläche geführt.

Aus dem Stand der Technik sind bereits viele Patentanmeldungen und Patente bekannt, die Erfindungen auf dem oben genannten technischen Gebiet beschreiben. Die Patentanmelderin hat selbst bereits Patentanmeldungen auf dem technischen Gebiet eingereicht: z.B. DE 10 2012 006 371 A1, DE 10 2014 011 301 A1 und DE 10 2015 205 631 A1. In den drei genannten Patentanmeldungen sind Vorrichtungen und Verfahren im Detail beschrieben, welche es erlauben, beliebige 3D-Objekte bzw. deren beliebig gekrümmte Oberflächen an beliebiger Stelle mit beliebigen Druckbildern zu versehen. Dabei kommt, wie oben bereits erwähnt, ein robotergeführter Tintenstrahl-Druckkopf zum Einsatz. Sowohl der Roboter als auch der Druckkopf sind mit einer Steuerung, das heißt einem Rechner, verbunden, auf welchem die notwendigen Rechnerprogramme und Daten zur Ansteuerung der Bewegung des Roboters und des druckbildgemäßen Tintenausstoßes des Druckkopfes abgelegt sind.

Beim Bedrucken von gekrümmten Oberflächen besteht, im Gegensatz zum Bedrucken ebener Substrate, wie beispielsweise Papierbogen, das Problem, dass die Dichte der applizierten Tintentropfen auf der zu bedruckenden Oberfläche und die dadurch erzeugten Tonwerte Schwankungen unterliegen kann. Diese Schwankungen führen zu visuell wahrnehmbaren Veränderungen des Druckbildes, welche unerwünscht sind. Solche Schwankung bzw. Störungen gilt es daher zu vermeiden.

Die JP 2011227782 beschäftigt sich ebenfalls mit dem Bedrucken von Objekten und beschreibt ein Verfahren hierzu. Das Dokument äußert sich jedoch nicht zu der genannten Frage, wie die unerwünschten Tonwertänderungen verhindert werden können bzw. welche technischen Maßnahmen dazu vorgesehen werden müssen.

Die EP 2 287 722 A1, die den Oberbegriff des Anspruchs 1 formt, beschreibt ein Verfahren und eine Vorrichtung zur Generierung von Druckdaten. Dabei wird ein dreidimensionaler Körper mit einem in Druckbänder zerlegten Druckbild bedruckt.

Die EP 2 327 555 A1 beschreibt ein Verfahren zur adaptiven Anpassung des Volumenstroms der ausgestoßenen Tinte. Das Verfahren kann beim Bedrucken eines Druckteiles eingesetzt werden, welches ein Höhenprofil als Oberflächenstruktur aufweist. Die EP 2 591 917 A1 beschreibt ein Verfahren und eine Vorrichtung für den Tintenstrahldruck auf gekrümmte Behälteroberflächen. Dabei lassen sich die Ausstoßzeitpunkte durch Verschieben einzelner Bildpunkte auf einer zu druckenden Bildvorlage in oder entgegen des Druckvorschubs einstellen.

Vor diesem Hintergrund ist es eine Aufgabe der vorliegenden Erfindung, ein gegenüber dem Stand der Technik verbessertes Verfahren zu schaffen, welches es ermöglicht, beliebige dreidimensionale Objekte mit beliebig gekrümmten Oberflächen zu bedrucken und dabei unerwünschte Störungen des zu druckenden Bildes, insbesondere Tonwertänderungen, zu verhindern.

Eine erfindungsgemäße Lösung dieser Aufgabe stellt ein Verfahren mit den Merkmalen von Anspruch 1 dar.

Ein erfindungsgemäßes Verfahren zum Tintenstrahl-Bedrucken wenigstens eines gekrümmten Bereichs der Oberfläche eines Objekts mit einem Druckbild, wobei in dem Bereich ein Raster von Tintentropfen aufgebracht wird und dadurch Druckpunkte erzeugt werden und wobei das Raster von einem Rechner berechnet wird und die Tintentropfen von einem Druckkopf mittels Düsen einer Düsenfläche des Druckkopfs erzeugt und im Bereich appliziert werden, umfasst folgende, in dem Rechner ausgeführte Schritte a) bis g) und folgenden, vom Druckkopf ausgeführten Schritt h): a) Bereitstellen von Daten, welche das Druckbild darstellen, b) Bereitstellen oder Berechnen von Daten, welche den Bereich darstellen, c) Bereitstellen oder Berechnen von Bahndaten zu Bahnen, auf welchen sich der Druckkopf oder das Objekt bewegt, d) Berechnen der Applikationsorte der Tintentropfen unter Verwendung der Daten aus b) und c), e) Berechnen von Daten, welche auf einer Kachelung des Bereichs basieren, unter Verwendung der Daten aus d), f) Kalibration der Tonwerte des Druckbildes unter Verwendung der Daten aus e), g) Rastern des Druckbildes unter Verwendung der Daten aus f), und h) Bedrucken des Bereichs mit dem gerasterten Druckbild, und zeichnet sich dadurch aus, dass Schritt f) Folgendes umfasst: Verwenden einer von den Rasterwerten und von den Kachel-Flächeninhalten abhängigen Kalibrationsfunktion.

Das erfindungsgemäße Verfahren ermöglicht es in vorteilhafter Weise, dreidimensionale Objekte mit beliebig geformten bzw. gekrümmten Oberflächen zu bedrucken. Das Verfahren ermöglicht es weiterhin, beliebige Druckbilder an beliebigen Orten auf dem Objekt zu platzieren. Schließlich ermöglicht es das Verfahren, unerwünschte Dichteschwankungen der Tropfen auf der Oberfläche bzw. daraus resultierende unterwünschte Tonwertänderungen zu vermeiden (oder zumindest ausreichend zu reduzieren) und daher visuell ansprechende dreidimensionale Druckprodukte (dreidimensionale Objekte mit Aufdrucken) zu erzeugen. Hierzu werden erfindungsgemäß die Verfahrensschritte a) bis g) und insbesondere die Verfahrensschritte e) und f) durchgeführt.

Vorteilhafte und daher bevorzugte Weiterbildungen der Erfindung ergeben sich aus den zugehörigen Unteransprüchen sowie aus der Beschreibung und den zugehörigen Zeichnungen

Eine bevorzugte Weiterbildung des erfindungsgemäßen Verfahrens kann sich dadurch auszeichnen, dass Schritt d) Folgendes umfasst: d1) Projektion der Orte der Düsen auf die Oberfläche.

Eine bevorzugte Weiterbildung des erfindungsgemäßen Verfahrens kann sich dadurch auszeichnen, dass Schritt d) Folgendes umfasst: d2) Korrektur der Projektion unter Berücksichtigung wenigstens der Applikationsgeschwindigkeit der Tintentropfen relativ zur Oberfläche.

Eine bevorzugte Weiterbildung des erfindungsgemäßen Verfahrens kann sich dadurch auszeichnen, dass Schritt e) Folgendes umfasst: e1) Zuordnen von unregelmäßigen Kacheln zu den Druckpunkten, und e2) Berechnen der jeweiligen Kachel-Flächeninhalte.

Eine bevorzugte Weiterbildung des erfindungsgemäßen Verfahrens kann sich dadurch auszeichnen, dass Schritt g) zwei Schritte umfasst, entweder: g1) Rück-Projektion der Orte der Druckpunkte in die Düsenfläche, und g2) Rastern unter Verwendung eines 2D-Rasterverfahrens, oder: g3) Rastern unter Verwendung eines 3D-Rasterverfahrens, und g4) Rückprojektion der Orte der Druckpunkte in die Düsenfläche. Es können zudem Tropfengrößen, welche zuvor bestimmt bzw. berechnet wurden, in die Düsenfläche rückprojiziert werden.

Eine bevorzugte Weiterbildung des erfindungsgemäßen Verfahrens kann sich dadurch auszeichnen, dass ein zusätzlicher Schritt B' Folgendes umfasst: Mapping des Druckbildes auf die Oberfläche.

Eine erfindungsgemäße Vorrichtung zur Durchführung des oben genannten Verfahrens oder seiner Weiterbildungen, ist eine Vorrichtung, wobei: - die Vorrichtung einen Roboter, einen Druckkopf und einen Rechner umfasst, - der Rechner derart ausgebildet ist, dass die Verfahrensschritte a) bis g) auf dem Rechner durchgeführt und der Roboter und der Druckkopf anschließend von dem Rechner angesteuert werden, und - der Roboter eine Bewegung ausführt und der Druckkopf dabei Tintentropfen erzeugt.

### Figurenbeschreibung

Die Erfindung und deren vorteilhafte Weiterbildungen werden nachfolgend unter Bezug auf die zugehörigen Zeichnungen anhand eines bevorzugten Ausführungsbeispiels näher beschrieben.

Die Zeichnungen zeigen:
- Figur 1: Eine Perspektivansicht einer Vorrichtung bei der Durchführung eines bevorzugten Ausführungsbeispiels des erfindungsgemäßen Verfahrens;
- Figur 2: Eine schematische Ansicht von erfindungsgemäß erzeugten Druckpunkten;
- Figur 3: Eine schematische Ansicht einer erfindungsgemäß verwendeten, bevorzugten Kachelung;
- Figur 4: Eine vereinfachte grafische Darstellung einer erfindungsgemäß verwendeten, bevorzugten Kalibrationsfunktion; und
- Figur 5: Eine schematische Darstellung des Ablaufs einer bevorzugten Ausführungsform des erfindungsgemäßen Verfahrens.

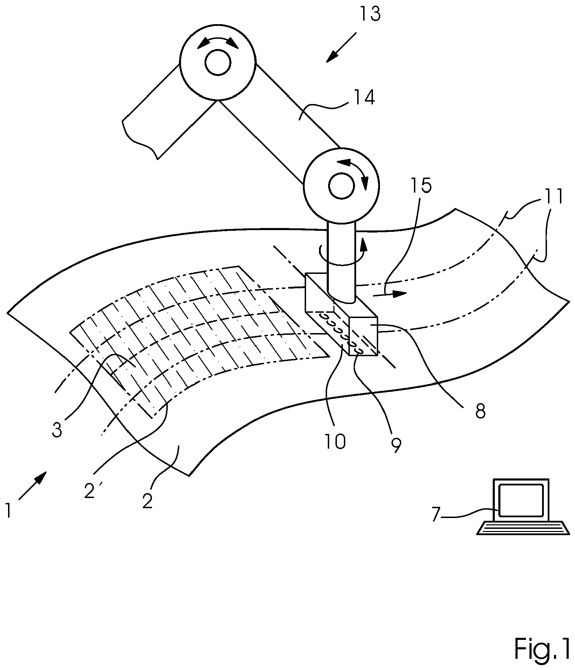

Die in Figur 1 gezeigte Vorrichtung umfasst einen Roboter 13 mit einem Roboterarm 14 und einen am Roboterarm angebrachten Druckkopf 8 sowie einen Rechner 7 zur Steuerung der Bewegung des Roboters und des Tintenausstoßes des Druckkopfs. Der Roboter ist bevorzugt ein mehrachsiger Roboter, zum Beispiel ein Gelenkarm-Roboter, und insbesondere ein sogenannter Industrie-Roboter. Der Druckkopf ist ein Tintenstrahldruckkopf mit einer Düsenfläche 10, welche wenigstens eine Reihe von Düsen 9 aufweist. Die Düsen sind einzeln ansteuerbar und stoßen während der Bewegung des Druckkopfs Tintentropfen entsprechend des zu druckenden Druckbildes aus.

Der Roboter 13 führt den Druckkopf entlang eines Objekts 1. Dieses weist eine gekrümmte Oberfläche 2 auf, welche innerhalb eines Bereichs 2' mit einem Druckbild 3 versehen werden soll. Da der Bereich breiter ist, als die Druckbreite des Druckkopfs 8, wird der Druckkopf auf mehreren Bahnen 11 in einer Bewegungsrichtung 15 und mit einem Druckabstand zur Oberfläche entlang des Objekts bewegt. Die dabei erzeugten Druckbild-Streifen schließen aneinander an und erzeugen so das Druckbild 3.

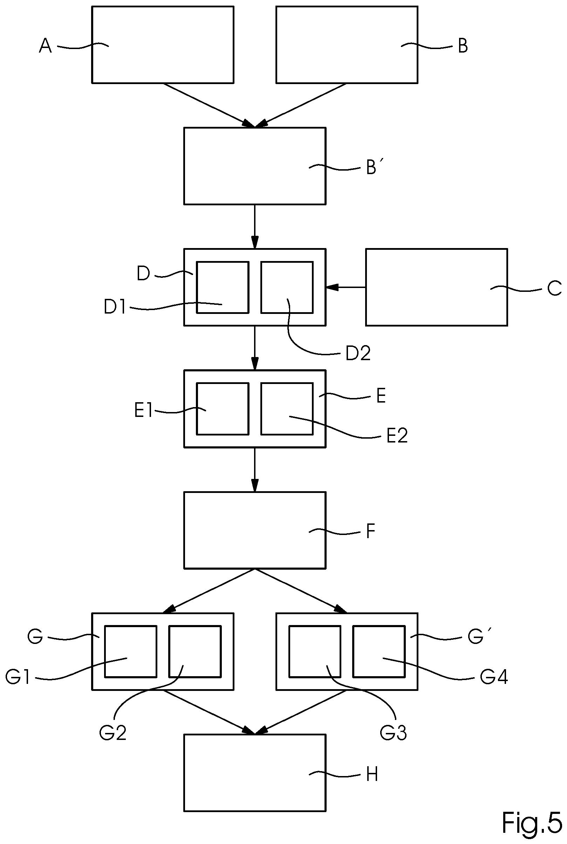

Die bevorzugte Ausführungsform des erfindungsgemäßen Verfahrens wird im Folgenden mit Blick auf die weiteren Figuren, insbesondere mit Blick auf Figur 5, und den dort dargestellten Ablauf der Verfahrensschritte A bis H beschrieben.

### Verfahrensschritt A: Bereitstellen von Daten, welche das Druckbild darstellen

In Verfahrensschritt A werden dem Rechner 7, sofern nicht bereits vorhanden, die erforderlichen Daten für das zu druckende Druckbild 3 bereitgestellt. Diese Daten können zum Beispiel in Form einer sogenannten Bitmap bereitgestellt werden, welche matrixartig Informationen über die Farbwerte enthält. Das Druckbild kann eine Farbfläche, ein Muster, ein Text, ein Logo, ein Bild, etc. oder auch eine beliebige Kombination davon sein. Bevorzugt handelt es sich um ein mehrfarbiges Bild. Da solche mehrfarbigen Bilder üblicherweise in sogenannten Farbauszügen vorliegen, können die Daten des Druckbildes auch mehrere einzelne Datensätze für die einzelnen Farbauszüge (CMYK) darstellen. Weiterhin kann es sich bei den Daten des Druckbildes auch um mehrere einzelne Druckbilder handeln, welche auf der Oberfläche des Objektes an verschiedenen Stellen aufgedruckt werden.

### Verfahrensschritt B: Bereitstellen oder Berechnen von Daten, welche den Bereich darstellen

Um das Objekt 1 mit seiner gekrümmten Oberfläche 2 präzise bedrucken zu können, müssen Daten bereitgestellt werden, die das Objekt bzw. dessen Oberfläche präzise beschreiben. Das Bereitstellen entsprechender Daten ist bereits in den folgenden beiden deutschen Patentanmeldungen der gleichen Anmelderin ausführlich beschrieben:
DE 10 2012 006 371 A1 und DE 10 2014 011 301 A1. Es sei daher an dieser Stelle auf die Offenbarungen dieser beiden Patentanmeldungen betreffend die Bereitstellung von Daten, die das Objekt bzw. dessen Oberfläche beschreiben, verwiesen.

### Optionaler Verfahrensschritt B': Mapping

Beim sogenannten Mapping oder auch Textur-Mapping werden die Daten des Druckbildes 3 aus Verfahrensschritt A und die Daten des Bereichs aus Verfahrensschritt B verwendet. Es wird dabei innerhalb des Bereichs 2' eine (rein rechentechnisch erfolgende) Platzierung des Druckbilds 3 vorgenommen. Mit anderen Worten: Es wird, je nach Designvorgaben, festgelegt, wie und wo das Druckbild zu liegen kommen soll. Hierbei kann das Druckbild zum Beispiel auch (wiederum rein rechentechnisch) verschoben, rotiert oder verzerrt werden.

### Verfahrensschritt C: Bereitstellen oder Berechnen von Bahndaten zu Bahnen, auf welchen sich der Druckkopf oder das Objekt bewegt

Aus den vorangegangenen Verfahrensschritten A, B und B' steht fest, welches Druckbild 3 auf welchem Objekt1 bzw. auf welcher seiner Oberflächen 2 wie zu liegen kommen soll. Um dieses Druckbild zu erzeugen, ist es, wie oben bereits erwähnt, zumeist erforderlich, den Druckkopf 8 mehrfach über die Oberfläche zu bewegen und dabei das Druckbild aus Streifen zusammen zu setzen. Daher ist eine Bahnplanung für den Roboter 13 bzw. für den vom Roboter geführten Druckkopf 8 erforderlich. Eine solche Bahnplanung ist in den folgenden deutschen Patentanmeldungen der gleichen Patentanmelderin bereits ausführlich beschrieben: DE 10 2014 011 301 A1 und DE 10 2015 205 631 A1. Es sei an dieser Stelle hinsichtlich der Durchführung der Bahnplanung daher auf die betreffenden Offenbarungsstellen der beiden genannten Patentanmeldungen verwiesen.

### Verfahrensschritt D: Berechnen der Applikationsorte der Tintentropfen unter Verwendung der Daten aus Verfahrensschritten B und C

Die Bewegung des Druckkopfs 8 mittels des Roboters 13 entlang der Bahnen 11 und somit der Oberfläche 2 des Objekts 1 führt bei gekrümmten Oberflächen 2 dazu, dass nicht alle Tintentropfen 5, die auf die Oberfläche gelangen, den gleichen Abstand zu benachbarten Tintentropfen haben. Wird der Druckkopf 8 beispielsweise auf einer kreisabschnittförmigen Bahn 11 bewegt, so liegen die von den Tintentropfen erzeugten Druckpunkte am inneren Rand der Bahn enger beieinander als diejenigen am äußeren Rand der Bahn. Mit anderen Worten: Die Dichte der Druckpunkte kann ortsabhängig sein und hierdurch kann es ortsabhängig zu einem zu hohen oder zu niedrigen Auftrag von Tintentropfen auf die Oberfläche kommen. Ohne die im Folgenden beschriebenen Korrekturmaßnahmen würde es daher ortsabhängig zu einem unterwünschten zu hohen oder zu niedrigen Tintenauftrag und damit zu einer unerwünschten Veränderung des zu druckenden Druckbildes kommen.

In Verfahrensschritt D, insbesondere in dessen Teilschritt D1, werden die Orte der Düsen 9 des Druckkopfs 8 auf die Oberfläche 2 projiziert. Diese Projektion ist ein rechentechnisch erfolgender Vorgang, welcher bevorzugt in dem Rechner 7 abläuft. Bei Kenntnis des Druckbildes, der zu bedruckenden gekrümmten Oberfläche und der Lage, Ausrichtungen gegebenenfalls Verzerrung des Druckbildes kann für jede Düse des Druckkopfs zu jedem Zeitpunkt, das heißt an jeder Stelle der Bahn 11, bestimmt werden, ob ein Tropfen ausgestoßen wird oder nicht und an welcher Stelle der Tropfen auf der Oberfläche des Objektes (bei idealer, das heißt geradliniger Flugbahn) zu liegen kommt. Der dabei im Rechner 7 ablaufende Rechenprozess ist im Wesentlichen ein Algorithmus, welcher die rechentechnischen Schritte der Projektion der Orte der Düsen auf die Oberfläche des Objekts durchführt und dabei einer rein rechnerischen Simulation des späteren Druckvorgangs gleichkommen kann.

Neben dieser rein geometrischen Projektion kann in vorteilhafter Weise in Verfahrensschritt D2 auch eine Korrektur durchgeführt werden, welche die Applikationsgeschwindigkeit der Tintentropfen 5 relativ zur Oberfläche berücksichtigt. Die Tintentropfen fliegen nämlich nicht auf einer idealen, geradlinigen Flugbahn von der Düse zur Oberfläche. Denn neben der Geschwindigkeitskomponente in Richtung zur Oberfläche 10 (durch den Ausstoß des Tintentropfens aus der Düse) hat jeder Tintentropfen durch die Bewegung des Druckkopfs 8 entlang der Oberfläche 2 des Objektes 1 auch eine Geschwindigkeitskomponente, welche im Wesentlichen parallel zur Oberfläche liegen kann. Die Überlagerung der Geschwindigkeitskomponenten des Tintentropfens führt zu einer gekrümmten Flugbahn. Da die Bewegung des Kopfes, insbesondere dessen Geschwindigkeit, bekannt ist, kann die zusätzliche Geschwindigkeitskomponente des Tintentropfens bestimmt werden und der tatsächliche Landeort eines Tropfens auf der Oberfläche (rechentechnisch) bestimmt werden. Auch diese Berechnung wird bevorzugt von dem Rechner 7 durchgeführt. Bei der Berechnung kann bevorzugt ein physikalisch begründetes oder ein empirisch parametrisiertes Modell zum Einsatz kommen. Dabei werden in vorteilhafter Weise die folgenden Eingangsparameter benutzt: Tropfengröße, Geschwindigkeit in x- und z-Richtung (x: Bewegungsrichtung des Kopfs; z: Richtung senkrecht zur Oberfläche), Abstand zur Oberfläche, Widerstandsbeiwert für die Abbremsung des Tintentropfens in Luft.

### Verfahrensschritt E: Berechnen von Daten, welche auf einer Kachelung des Bereichs basieren, unter Verwendung der Daten aus Verfahrensschritt D

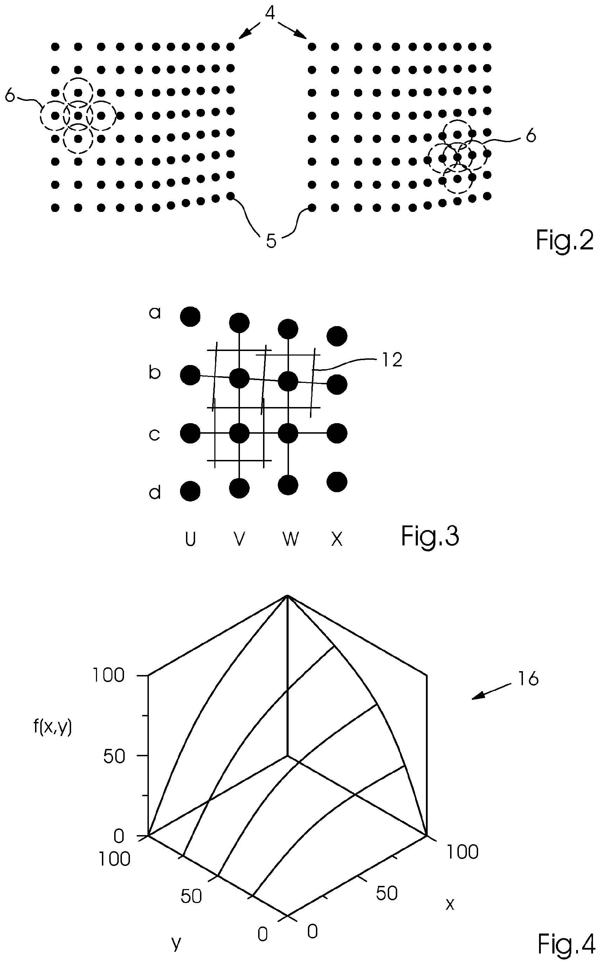

Wie bei jedem anderen, konventionellen Druckvorgang auch, müssen die zu druckenden Bilddaten einem sogenannten Raster-Image-Prozess (RIP) unterzogen werden. Zwar sind RIP-Methoden für das Drucken von zweidimensionalen Bildern auf ebenen, zweidimensionalen Oberflächen bekannt, jedoch können diese nicht ohne weiteres beim Drucken von Druckbildern auf gekrümmten Oberflächen von dreidimensionalen Körpern angewendet werden. Mit Blick auf Figur 2 wird deutlich, warum dies so ist. In Figur 2 ist jeweils auf der linken und rechten Seite ein Raster 4 aus Druckpunkten 6 gezeigt, welche durch auftreffende Tintentropfen 5 erzeugt werden. Die in der linken Hälfte kenntlich gemachten Druckpunkte 6 haben dabei einen größeren Abstand zu ihren jeweiligen Nachbarn, als die in der rechten Hälfte der Figur 2 kenntlich gemachten Druckpunkte 6. Dies kann, wie oben bereits erläutert, dadurch hervorgerufen werden, dass der Druckkopf im Allgemeinen auf einer gekrümmten Bahn entlang der gekrümmten Oberfläche bewegt wird und daher Tintentropfen näher zueinander zu liegen kommen können oder auch weiter voneinander beabstandet. In Figur 2 ist zudem erkennbar, dass dort, wo die Druckpunkte näher beisammen liegen, ein dunklerer Farbton erzeugt wird und dass dort, wo die Druckpunkte weiter auseinander liegen, ein hellerer Farbton erzeugt wird. Diese Dichteschwankung der Druckpunkte auf der Oberfläche muss beim Rastern des Druckbildes (RIP-Vorgang) berücksichtigt bzw. rechtzeitig korrigiert werden. Es sei an dieser Stelle noch angemerkt, dass die in Figur 2 dargestellten schwarzen Punkte die Auftrefforte der Tintentropfen darstellen sollen und die dargestellten Kreise die etwaigen Größen der dabei erzeugten Druckpunkte. Hierbei ist wichtig zu wissen, dass die Tintentropfen auf der Oberfläche spreiten, das heißt sich ausdehnen und gegebenenfalls bei saugenden Materialien auch eindringen. Dadurch kann es zu einem Überlagern der erzeugten Druckpunkte kommen. Dies ist in der Regel sogar gewünscht, insbesondere dann, wenn geschlossene Farbflächen erzeugt werden sollen. Was jedoch nicht gewünscht ist, ist ein zu starkes oder zu schwaches Überlappen der Druckpunkte, so dass sich störende Helligkeitsschwankungen im Druckbild ergeben.

Um die oben beschriebenen möglicherweise störenden Einflüsse zu vermeiden, wird rechentechnisch eine sogenannte Kachelung vorgenommen. Diese wird im Folgenden mit Blick auf Figur 3 beschrieben. Dort sind vergrößert einige Druckpunkte 6 aus Figur 2 dargestellt. Jedem Druckpunkt 6 wird dabei eine ihn umgebende Kachel 12 zugeordnet, wobei die Kacheln in vorteilhafter Weise für jeden Druckpunkt individuell bestimmt werden. Das heißt mit anderen Worten: An Stellen im Druckbild, an denen die Druckpunkte dichter zu liegen kommen würden, wird eine Kachelung mit Kacheln kleineren Flächeninhalts gewählt. Entsprechend wird an Stellen des Druckbilds, an denen die Dichte zunehmen würde, eine Kachelung mit Kacheln größeren Flächeninhalts gewählt.

Das Beispiel in Figur 4 zeigt, wie eine solche Kachelung aufgebaut sein kann: Beispielsweise werden unregelmäßige Vierecke gewählt. Diese können beispielsweise dadurch erzeugt werden, dass sie von den jeweiligen Mittelsenkrechten zwischen zwei benachbarten Druckpunkten begrenzt werden. Es sei an dieser Stelle nochmals angemerkt, dass diese Kachelung ein rein rechentechnischer Prozess ist, der bevorzugt im Rechner 7 abläuft.

Während im Verfahrensschritt E1 somit jedem Druckpunkt 6 eine individuelle Kachel 12 zugewiesen wird, bzw. den verschiedenen Druckpunkten unregelmäßige Kacheln zugewiesen werden, wird nun im Verfahrensschritt E2 für jeden Druckpunkt der Flächeninhalt der ihm zugewiesenen Kachel berechnet. Auch dieses Berechnen der Flächeninhalte erfolgt bevorzugt wiederum in dem Rechner 7.

Aufgrund der geringen Ausdehnungen der Kacheln kann zur Vereinfachung bei der Berechnung der Flächeninhalte angenommen werden, dass die einzelnen Kacheln keine Krümmung aufweisen. Dabei kann auch angenommen werden, dass die jeweilige Kachel in einer Tangentialebene durch den Druckpunkt zu liegen kommt.

### Verfahrensschritt F: Kalibration der Tonwerte unter Verwendung der Daten aus Verfahrensschritt E

Bei herkömmlichen 2D-Druckverfahren (ebene Druckbilder auf ebenen Substraten) ist es bereits bekannt, eine sogenannte Tonwert-Kalibration durchzuführen. Für diese Tonwert-Kalibration sind Kalibrationskurven bekannt, bei welchen über einer Achse für die Flächendeckung (0 bis 100%) die Tonwerte (0 bis 100%) aufgetragen sind. Dabei ist eine solche Kalibrationskurve üblicherweise keine Gerade mit 45° Steigung, sondern eine gekrümmte Kurve. Das heißt, ein Tonwert von beispielsweise 60% wird nicht bei einer Flächendeckung von 60%, sondern bereits bei einer Flächendeckung von 50% erreicht.

Erfindungsgemäß wird nun ebenfalls eine Kalibration durchgeführt, wobei bevorzugt eine sogenannte erweiterte oder 3D-Kalibration verwendet wird. Eine hierfür vorteilhaft verwendbare Kalibrationsfunktion ist in Figur 4 dargestellt. Die Funktion 16 bildet eine Fläche über den beiden Achsen X und Y. Auf der Achse X ist der Rasterwert oder die Flächendeckung aufgetragen, während auf der Achse Y der Flächeninhalt der jeweiligen Kachel aufgetragen ist. Dabei können die berechneten Flächeninhalte der jeweiligen Kacheln auf Werte zwischen Null und 100 normiert werden. Aus Figur 4 wird erkennbar, dass eine Kurve durch den Flächenwert 75 steiler verläuft als eine Kurve durch den Flächenwert 50 und dass eine Kurve durch den Flächenwert 25 flacher verläuft als eine Kurve durch den Flächenwert 50. Die Kalibrationsfunktion 16 enthält somit eine Korrektur der Tonwerte in Abhängigkeit der zuvor berechneten Flächeninhalte der jeweiligen Kacheln. Ob ein Tonwert bei einem gegebenen Druckpunkt nun erhöht oder erniedrigt werden muss, kann aus der bereitgestellten 3D-Kalibrationsfunktion ermittelt werden.

Alternativ können auf der Y-Achse auch Werte über einem Wert von 100 aufgetragen werden, so dass der Wert 100 beispielsweise dem nominalen Flächeninhalt einer Kachel entspricht (also z.B. bei Kacheln einer gleichmäßig schachbrettartigen Kachelung) und Werte über der 100 größeren und Werten unter 100 kleineren Kacheln entsprechen. Beispielsweise kann die Y-Achse von Null bis etwa 120 reichen.

Die Flächeninhalte der Kacheln können auch auf die nominale Pixelgröße des Drucksystems normiert werden. Für ein beispielhaftes Drucksystem mit einer Auflösung von 360 dpi ist die nominale Druckpunktfläche bzw. deren Flächeninhalt 70,5 µm mal 70,5 µm.

Zur Bestimmung der Kalibrationsfunktion 16 kann ein parametrischer Zusammenhang verwendet werden oder die Funktion kann durch Interpolation von gemessenen Stützstellen ermittelt werden.

### Verfahrensschritt G: Rastern des Druckbildes unter Verwendung der Daten aus Verfahrensschritt F

Das Rastern wird durchgeführt, um für jeden möglichen Tintentropfen zu bestimmen bzw. zu berechnen, ob dieser gesetzt werden soll oder nicht bzw. für jede Düse, ob diese zu gegebenem Zeitpunkt einen Tropfen auf die im Wirkbereich der Düse liegende Oberfläche des Objekts übertragen und somit einen Druckpunkt erzeugen soll oder nicht. Sofern der Druckkopf unterschiedliche Tropfengrößen (z.B. klein, mittel und groß) unterstützt, kann bei der Durchführung des Rasterns auch bestimmt bzw. berechnet werden, welche Tropfengröße für den zu erzeugenden Druckpunkt zu verwenden ist.

Das Rastern kann erfindungsgemäß auf zwei alternative Weisen erfolgen. Die erste Weise wird nun beschrieben. Dabei werden die Orte der Druckpunkte rechentechnisch von der Oberfläche 2 des Objektes 1 wieder auf die Düsenfläche 10 des Druckkopfs 8 zurückgerechnet. Sofern die Daten dieser Rückberechnung bereits aus wenigstens einem der Verfahrensschritte A bis D bekannt sind, kann auf diese rechentechnische Rückprojektion verzichtet werden bzw. diese Rückprojektion ist gleichbedeutend mit dem Verwenden der bereits vorhandenen Daten. Mit "Rückprojektion in die Düsenfläche" ist dabei eine Rückprojektion in einen Flächenabschnitt parallel zur zu bedruckenden Oberfläche des Objektes, in welcher sich die Düsenfläche bewegt, gemeint. Diese sogenannte Hüll-Fläche ist in der Regel ebenfalls gekrümmt. Die Düsenfläche des Kopfs wird in Abhängigkeit der Krümmung der Oberfläche des Objektes auch nicht immer komplett in dieser Hüll-Fläche zu liegen kommen. Bei der Berechnung kann daher zum Beispiel davon ausgegangen werden, dass eine mittlere Düse der Düsenfläche sich immer in der Hüll-Fläche befindet, andere (insbesondere randständige) Düsen dürfen dann über oder unter der Hüll-Fläche liegen.

Nach der sogenannten Rückprojektion ist dann bekannt (bzw. die benötigten Daten sind berechnet), welche Düse an welchem Ort und zu welcher Zeit aktiviert werden muss, um einen Tropfen so zu setzen, dass dieser Tropfen an der richtigen Stelle des Druckbildes auf dem Objekt platziert wird.

Neben diesem Schritt G1 der Rückprojektion wird nun ein Verfahrensschritt G2 des Rasterns durchgeführt. Dabei kann ein herkömmliches 2D-Rasterverfahren verwendet werden, bei dem auf eine Tonwertkalibration verzichtet werden kann, da bereits unter Verfahrensschritt F eine sogenannte 3D-Tonwertkalibration durchgeführt wurde.

Alternativ kann auch Verfahrensschritt G' mit den Unter-Verfahrensschritten G3 und G4 wie folgt durchgeführt werden: Die Rasterung erfolgt bei dieser Alternative vor der Rückprojektion der Orte der Druckpunkte in die Düsenfläche. Hierzu ist jedoch ein sogenanntes 3D-Rasterverfahren notwendig. Ein solches 3D-Rasterverfahren unterscheidet sich von dem herkömmlichen 2D-Rasterverfahren und erfolgt rechentechnisch direkt auf der dreidimensionalen Oberfläche des Objekts. Beispielsweise wäre ein für den 2D-Fall bekanntes Error-Diffusion-Verfahren geeignet, um entsprechend für den 3D-Fall angepasst zu werden.

Die Bestimmung bzw. Berechnung von unterschiedlichen Tropfengrößen -sofern dies in Abhängigkeit des verwendeten Druckkopfs und/oder dessen Ansteuerung technisch möglich und tatsächlich auch vorgesehen ist - kann bei der Durchführung eines wie zuvor beschriebenen 2D- oder 3D-Rasterverfahrens erfolgen.

### Verfahrensschritt H: Bedrucken des Bereichs mit dem gerasterten Druckbild

In diesem letzten Verfahrensschritt werden die aus den zuvor erfolgenden Rechenschritten erhaltenen Daten verwendet, um den Druckkopf 8 während seiner Bewegung mittels des Roboters 13 entlang der Oberfläche 2 des Objektes 1 derart anzusteuern, dass das gewünschte Druckbild 3 an der gewünschten Position und ohne störende Dichteschwankungen erzeugt wird.

### Bezugszeichenliste

- 1: Objekt
- 2: Oberfläche
- 2': Bereich der Oberfläche
- 3: Druckbild
- 4: Raster
- 5: Tintentropfen
- 6: Druckpunkte
- 7: Rechner
- 8: Druckkopf
- 9: Düsen
- 10: Düsenfläche
- 11: Bahn
- 12: Kachelung/Kacheln
- 13: Roboter
- 14: Roboterarm
- 15: Bewegungsrichtung
- 16: Kalibrationsfunktion

- A - H: Verfahrensschritte
- X: Rasterwert/Flächendeckung
- Y: Kachel-Flächeninhalt

## Patentansprüche

1. Verfahren zum Tintenstrahl-Bedrucken wenigstens eines gekrümmten Bereichs (2') der Oberfläche (2) eines Objekts (1) mit einem Druckbild (3), wobei in dem Bereich (2') ein Raster (4) von Tintentropfen (5) aufgebracht wird und dadurch Druckpunkte (6) erzeugt werden und wobei das Raster (4) von einem Rechner (7) berechnet wird und die Tintentropfen (5) von einem Druckkopf (8) mittels Düsen (9) einer Düsenfläche (10) des Druckkopfs (8) erzeugt und im Bereich (2') appliziert werden,
mit folgenden, in dem Rechner (7) ausgeführten Schritten a) bis g) und folgendem, vom Druckkopf (8) ausgeführten Schritt h):
a) Bereitstellen (A) von Daten, welche das Druckbild (3) darstellen,
b) Bereitstellen (B) oder Berechnen (B) von Daten, welche den Bereich (2') darstellen,
c) Bereitstellen (C) oder Berechnen (C) von Bahndaten zu Bahnen (11), auf welchen sich der Druckkopf (8) oder das Objekt (1) bewegt,
d) Berechnen (D) der Applikationsorte der Tintentropfen (5) unter Verwendung der Daten aus b) und c),
e) Berechnen (E) von Daten, welche auf einer Kachelung (12) des Bereichs (2') basieren, unter Verwendung der Daten aus d),
f) Kalibration (F) der Tonwerte des Druckbildes (3) unter Verwendung der Daten aus e),
g) Rastern (G, G') des Druckbildes (3) unter Verwendung der Daten aus f), und
h) Bedrucken (H) des Bereichs (2') mit dem gerasterten Druckbild (3),
**dadurch gekennzeichnet,**
**dass** Schritt f) Folgendes umfasst:
Verwenden (F) einer von den Rasterwerten und von den Kachel-Flächeninhalten abhängigen Kalibrationsfunktion.

2. Verfahren nach Anspruch 1,
**dadurch gekennzeichnet,**
**dass** Schritt d) Folgendes umfasst:
d1) Projektion (D1) der Orte der Düsen (9) auf die Oberfläche (2).

3. Verfahren nach Anspruch 2,
**dadurch gekennzeichnet,**
**dass** Schritt d) Folgendes umfasst:
d2) Korrektur (D2) der Projektion unter Berücksichtigung wenigstens der Applikationsgeschwindigkeit der Tintentropfen (5) relativ zur Oberfläche (2).

4. Verfahren nach Anspruch 1,
**dadurch gekennzeichnet,**
**dass** Schritt e) Folgendes umfasst:
e1) Zuordnen (E1) von unregelmäßigen Kacheln (12) zu den Druckpunkten (6), und
e2) Berechnen (E2) der jeweiligen Kachel-Flächeninhalte.

5. Verfahren nach Anspruch 1,
**dadurch gekennzeichnet,**
**dass** Schritt g) zwei Schritte umfasst, entweder:
g1) Rück-Projektion (G1) der Orte der Druckpunkte (6) in die Düsenfläche (10), und
g2) Rastern (G2) unter Verwendung eines 2D-Rasterverfahrens,
oder:
g3) Rastern (G3) unter Verwendung eines 3D-Rasterverfahrens, und
g4) Rückprojektion (G4) der Orte der Druckpunkte (6) in die Düsenfläche (10).

6. Verfahren nach Anspruch 1,
**dadurch gekennzeichnet,**
**dass** ein zusätzlicher Schritt B' Folgendes umfasst:
Mapping des Druckbildes (3) auf die Oberfläche (2).

7. Vorrichtung zur Durchführung des Verfahrens nach einem der Ansprüche 1 bis 6, wobei:
- die Vorrichtung einen Roboter (13), einen Druckkopf (8) und einen Rechner (7) umfasst,
- der Rechner derart ausgebildet ist, dass die Verfahrensschritte a) bis g) auf dem Rechner durchgeführt und der Roboter und der Druckkopf anschließend von dem Rechner angesteuert werden, und
- der Roboter eine Bewegung ausführt und der Druckkopf dabei Tintentropfen erzeugt.

## Claims

1. Method for printing a print image (3) onto at least one curved region (2') of the surface (2) of an object (1) in an inkjet process wherein a screen (4) of ink drops (5) is applied to the region (2') to create print dots (6), wherein the screen (4) is calculated by a computer (7), and wherein the ink drops (5) are created and applied to the region (2') by a print head (8) by means of nozzles (9) of a nozzle surface (10) of the print head (8),
comprising the following steps a) to g) carried out on the computer (7) and the following step h) carried out by the print head (8):
a) providing (A) data representing the print image (3),
b) providing (B) or calculating (B) data representing the region (2'),
c) providing (C) or calculating (C) path data on paths (11) on which the print head (8) or the object (1) moves,
d) calculating (D) the application locations of the ink drops (5) using the data from steps b) and c),
e) calculating (E) data based on a tiling (12) of the region (2') using the data from step d),
f) calibrating (F) the tone values of the print image (3) using the data from step e),
g) screening (G, G') the print image (3) using the data from step f), and
h) printing (H) the screened image (3) onto the region (2'),
**characterized**
**in that** step f) comprises using (F) a calibration function dependent on the screen values and on the surface area of the tiles.

2. Method according to claim 1,
**characterized**
**in that** step d) comprises a step d1) of projecting (D1) the locations of the nozzles (9) onto the surface (2).

3. Method according to claim 2,
**characterized**
**in that** step d) comprises a step d2) of correcting (D2) the projection by factoring in at least the application speed of the ink drops (5) relative to the surface (2).

4. Method according to claim 1,
**characterized**
**in that** step e) comprises a step e1) of assigning (E1) irregular tiles (12) to the print dots (6), and a step e2) of calculating (E2) the surface areas of the respective tiles.

5. Method according to claim 1,
**characterized**
**in that** step g) comprises two steps, either steps
g1) of re-projecting (G1) the locations of the print dots (6) onto the nozzle surface (10) and g2) of screening (G2) using a 2D screening process,
or steps
g3) of screening (G3) using a 3D screening process and
g4) of re-projecting (G4) the locations of the print dots (6) onto the nozzle surface (10).

6. Method according to claim 1,
**characterized**
**in that** an additional step B' comprises mapping the print image (3) onto the surface (2).

7. Device for executing the method according to any one of claims 1 to 6, wherein
- the device comprises a robot (13), a print head (8) and a computer,
- the computer is equipped to execute steps a) to g) and subsequently to actuate the robot and the print head, and wherein
- the robot carries out a movement and the print head generates ink drops during the movement.

## Revendications

1. Procédé pour l'impression à jet d'encre d'au moins une zone incurvée (2') de la surface (2) d'un objet (1) avec une image d'impression (3), pour laquelle une trame (4) de gouttes d'encre (5) est appliquée dans la zone (2'), générant des points d'impression (6), et pour laquelle la trame (4) est calculée par un ordinateur (7) et les gouttes d'encre (5) générées par une tête d'impression (8) au moyen des buses (9) d'une surface de buse (10) de la tête d'impression (8) et appliquées dans la zone (2'),
avec les étapes a) à g) suivantes exécutées dans l'ordinateur (7) et l'étape suivante h), exécutée par la tête d'impression (8) :
a) fourniture (A) de données représentant l'image d'impression (3),
b) fourniture (B) ou calcul de données (B) représentant la zone (2'),
c) fourniture (C) ou calcul (C) des données de bande pour les bandes (11) sur lesquelles la tête d'impression (8) ou l'objet (1) se déplace,
d) calcul (D) du type d'application des gouttes d'encre (5) en utilisant les données de b) et c),
e) calcul (E) de données basées sur un quadrillage (12) de la zone (2'), en utilisant les données de d),
f) calibrage (F) de la tonalité de l'image d'impression (3) en utilisant les données de e),
g) tramage (G, G') de l'image d'impression (3) en utilisant les données de f), et
h) impression (H) de la zone (2') avec l'image d'impression tramée (3),
**caractérisé en ce**
**que** l'étape f) inclut ce qui suit :
utilisation (F) de l'une des valeurs de tramage et de la fonction de calibrage indépendante des contenus des surfaces des carreaux.

2. Procédé selon la revendication 1,
**caractérisé en ce**
**que** l'étape d) comprend ce qui suit :
d1) projection (D1) des emplacements des buses (9) sur la surface (2).

3. Procédé selon la revendication 2,
**caractérisé en ce**
**que** l'étape d) comprend ce qui suit :
d2) correction (D2) de la projection en tenant au moins compte de la vitesse d'application des gouttes d'encre (5) par rapport à la surface (2).

4. Procédé selon la revendication 1,
**caractérisé en ce**
**que** l'étape e) comprend ce qui suit :
e1) affectation (E1) de carreaux irréguliers (12) aux points d'impression (6), et
e2) calcul (E2) des contenus de la surface de carreau respective.

5. Procédé selon la revendication 1,
**caractérisé en ce**
**que** l'étape g) comprend deux étapes, soit :
g1) rétroprojection (G1) des emplacements de points d'impression (6) dans la surface de la buse (10), et
g2) tramage (G2) en utilisant une méthode de tramage 2D, ou :
g3) tramage (G3) en utilisant une méthode de tramage 3D et
g4) rétroprojection (G4) des emplacements d'impression (6) dans la surface de la buse (10).

6. Procédé selon la revendication 1,
**caractérisé en ce**
**qu'**une étape supplémentaire B' comprend ce qui suit :
mappage de l'image d'impression (3) sur la surface (2).

7. Dispositif pour exécution du procédé selon l'une des revendications 1 à 6, pour lequel :
- le dispositif comprend un robot (13), une tête d'impression (8) et un ordinateur (7),
- l'ordinateur étant conçu de sorte que les étapes du procédé a) à g) soient exécutées sur l'ordinateur et que le robot et la tête d'impression soient ensuite pilotées par l'ordinateur, et pour lequel
- le robot exécute un déplacement et la tête d'impression génère ce faisant des gouttes d'encre.
